# EUROPÄISCHE PATENTSCHRIFT

(11) **EP 1 511 918 B1**
(45) Veröffentlichungstag und Bekanntmachung des Hinweises auf die Patenterteilung: **07.12.2005**
(21) Anmeldenummer: 03720010.2
(22) Anmeldetag: 09.05.2003
(51) Int. Cl.: E21F 13/00, E21F 13/08, E21F 17/02

(54) **MONTAGEVORRICHTUNG FÜR EINE KABELTASSE**
MOUNTING DEVICE FOR A CABLE CUP
DISPOSITIF DE MONTAGE POUR UN CONDUIT DE CABLE

(30) Priorität: 10.06.2002 AT 36902 U
(43) Veröffentlichungstag der Anmeldung: 09.03.2005
(73) Patentinhaber: Wien Kanal-Abwassertechnologien GesmbH, 1030 Wien (AT)
(72) Erfinder: KÜBEL, Johann, A-3072 Kasten (AT); KADRNOSKA, Helmut, A-1220 Wien (AT); REISS, Gerhard, A-1130 Wien (AT)
(74) Vertreter: Wildhack, Helmut
(86) Internationale Anmeldenummer: PCT/AT2003/000134
(87) Internationale Veröffentlichungsnummer: WO 2003/104614

(56) Entgegenhaltungen:
- WO-A-02/22974
- DE-A- 3 122 393
- DE-B- 1 168 375
- GB-A- 2 040 856

## Beschreibung

Die Erfindung betrifft eine Montagevorrichtung für eine Kabeltasse gemäß dem Oberbegriff des Anspruches 1.

Es ist bekannt, Leitungen, insbesondere Glasfaserleitungen, in Abwasserkanälen anzuordnen, sodass Aufgrabungen für die Verlegung dieser Leitungen zumindest teilweise vermieden werden können. Die Leitungen werden hierbei von Kabeltassen aufgenommen, die an der Kanalwand befestigt werden. Aus der veröffentlichten österreichischen Patentanmeldung 1521/2000 ist ein Montagewagen bekannt, bei welchem ein verfahrbares Grundgerüst endseitig mit auskragenden Trägern versehen ist, auf welchen Sitze für Bedienungspersonen vorgesehen sind, von welchen auf einer heb- und senkbaren Plattform abgestützte Montageeinheiten betätigt werden. Ein solcher Montagewagen kann nur in begehbaren Kanälen eingesetzt werden. Häufig sollen jedoch Leitungen in Kanalrohren verlegt werden, welche einen solchen Durchmesser aufweisen, dass sie nicht begangen werden können, sodass der Einsatz von Bedienungspersonen im Kanal nicht möglich ist, sondern die auf einem Montagewagen vorgesehenen Montageeinheiten von der Erdoberfläche ferngesteuert werden müssen, wobei der Verlauf der an der Kanalwand zu befestigenden Kabeltassen nicht beeinflusst werden kann. Um zu verhindern, dass bei Anfall größerer Wassermengen mitgeführtes Schwemmgut an den Kabeltassen hängen bleibt und dadurch der wirksame Kanalquerschnitt verringert wird, ist es zweckmäßig, die Kabeltassen im Bereich des Scheitels der Kanäle anzuordnen. Andererseits darf die Kabeltasse nicht im Bereich einer Einmündung, beispielsweise eines Hauswasserkanales, angeordnet sein, da auch dann die Gefahr besteht, dass der Durchflussquerschnitt der Einmündung verringert wird und mitgeführtes Schwemmgut hängen bleibt.

Die vorliegende Erfindung hat sich zur Aufgabe gestellt, eine Montagevorrichtung für eine in einem Kanal angeordnete Kabeltasse zu schaffen, welche es ermöglicht, den Verlauf der Kabeltasse im Kanal zu verändem und den jeweiligen Erfordernissen anzupassen. Zur Lösung dieser Aufgabe schlägt die Erfindung, ausgehend von einer Montagevorrichtung, beinhaltend einen im Kanal in Längsrichtung desselben verfahrbaren Wagen, auf dem eine in Richtung zur Kanalwand verschiebbare Abstützeinheit für die Kabeltasse sowie eine Montageeinheit für die Festlegung der Kabeltasse an der Kanalwand vorgesehen sind, vor, dass die Montageeinheit auf einem Träger angeordnet ist, der um eine in Kanallängsrichtung verlaufende Achse schwenkbar mit dem Wagen verbunden ist. Diese Ausbildung ermöglicht infolge der schwenkbaren Anordnung des Trägers die Lage der Montageeinheit in Bezug auf die Kanalwand zu verändern und dadurch den Verlauf der mit dieser Montageeinheit an der Kanalwand zu befestigenden Kabeltasse den jeweiligen Erfordernissen anzupassen, also beispielsweise Kanaleinmündungen auszuweichen. Voraussetzung dafür ist natürlich, dass die Kabeltasse so ausgebildet ist, dass eine Änderung des Verlaufes derselben im Kanal möglich ist. Derartige Kabeltassen sind in einer älteren, nicht veröffentlichten Patentanmeldung der Anmelderin beschrieben.

Gemäß einer bevorzugten Ausführungsform der Erfindung umfasst die Montageeinheit eine am Träger angeordnete, in Richtung zur Kanalwand bewegbare, die Kabeltasse zumindest teilweise umgebende Ausrichteinheit, durch welche die Lage der Kabeltasse in Bezug auf die Kanalwand festgelegt wird, bevor die Befestigung derselben an der Kanalwand erfolgt. Diese Ausrichteinheit weist erfindungsgemäß die Kabeltasse an ihrer Unterseite abstützende Rollen und die Kabeltasse seitlich umschließende Wangen auf, sodass beim Verfahren des Wagens die Ausrichteinheit entlang der Kabeltasse bewegbar ist, eine Festlegung der Kabeltasse in der gewünschten Lage jedoch gewährleistet ist.

Um die Ausrichteinheit in Richtung zur Kanalwand bewegen zu können, ist am Träger eine, vorzugsweise druckmittelbetätigte, Kolben-Zylindereinheit angeordnet, an welcher die Ausrichteinheit abgestützt ist.

Ist die Kabeltasse durch die Ausrichteinheit in die gewünschte Lage gebracht, so muss in der Folge die Befestigung der Kabeltasse durch die Montageeinheit erfolgen, und zwar an einer Stelle, an welcher die von der Kabeltasse aufgenommenen Kabel durch die Befestigungsmittel nicht beschädigt werden. Damit diese Stelle exakt bestimmt und in der Folge auch beobachtet werden kann, sind gemäß einem weiteren Merkmal der Erfindung am Träger ein die Befestigungsstelle der Kabeltasse an der Kanalwand bestimmender Laserpointer sowie eine die Befestigungsstelle aufnehmende Kamera vorgesehen, deren Bilder an einen an der Oberfläche befindlichen Monitor gesandt werden.

Um die Kabeltasse nun an der Kanalwand zu befestigen, umfasst die Montageeinheit eine am Träger verschiebbar angeordnete Bohreinrichtung und eine am Träger verschiebbar angeordnete Befestigungseinrichtung, vorzugsweise eine Schraubendreheinrichtung, wobei die Lage der Bohreinrichtung und die Lage der Befestigungseinrichtung am Träger veränderbar sind. Diese Ausbildung ermöglicht es, die Bohreinrichtung entlang des Trägers zunächst in eine Lage zu bringen, in der das erforderliche Bohrloch gebohrt wird, und anschließend die Befestigungseinrichtung unter dem Bohrloch anzuordnen und durch das Bohrloch hindurch ein Befestigungsmittel, vor allem eine Befestigungsschraube, anzubringen. Diese Lage ist, wie bereits erwähnt, durch den Laserpointer bestimmt und die Arbeiten können durch die Kamera beobachtet werden.

Eine einfache Verschiebung von Bohreinrichtung und Befestigungseinrichtung am Träger erfolgt zweckmäßig dadurch, dass diese Einrichtungen auf wenigstens einem auf dem Träger verschiebbar gelagerten Schlitten angeordnet sind. Es können aber auch Bohreinrichtung und Befestigungseinrichtung auf verschiedenen, unabhängig voneinander am Träger verschiebbar angeordneten Schlitten vorgesehen sein.

Die Bohreinrichtung umfasst eine Bohrmaschine, die auf einem Ständer befestigt ist, der, vorzugsweise durch eine druckmittelbetätigte Kolben-Zylindereinheit, in Richtung zur Kanalwand verschoben werden kann, sodass dadurch der erforderliche Vorschub der Bohrmaschine bewirkt wird.

Die die Befestigungseinrichtung bildende Schraubendreheinrichtung weist eine den Schraubenkopf einer Befestigungsschraube umfassende, zu einer Drehbewegung angetriebene Aufnahme auf, die mit einer den Schraubenkopf umschließenden elastischen Hülse versehen ist. Diese Ausbildung ermöglicht es, den Schraubenkopf vor dem Eindrehen der Befestigungsschraube in der Kanalwand in der elastischen Hülse der Schraubendreheinrichtung zu fixieren, wobei nach dem Eindrehen der Befestigungsschraube durch Rückführung der Schraubendreheinrichtung in die Ausgangslage infolge der Elastizität der Hülse eine Entkoppelung des Schraubenkopfes erfolgt.

Zur automatischen Zufuhr einer Befestigungsschraube zur Aufnahme der Schraubendreheinrichtung ist an dem diese Schraubendreheinrichtung aufweisenden Schlitten ein Schraubenmagazin gelagert, von welchem über eine Zufuhreinrichtung der Schraubenkopf jeweils einer Schraube der Aufnahme zugeführt wird.

Die Abstützeinheit, auf welcher die Kabeltasse gelagert ist, bevor deren Lage an der Kanalwand festgelegt wird und eine Befestigung der Kabeltasse an der Kanalwand erfolgt, weist, vorzugsweise durch eine druckmittelbetätigte Kolben-Zylindereinheit, in Richtung zur Kanalwand verschiebbare Stützrollen auf, die auf dem Wagen abgestützt sind.

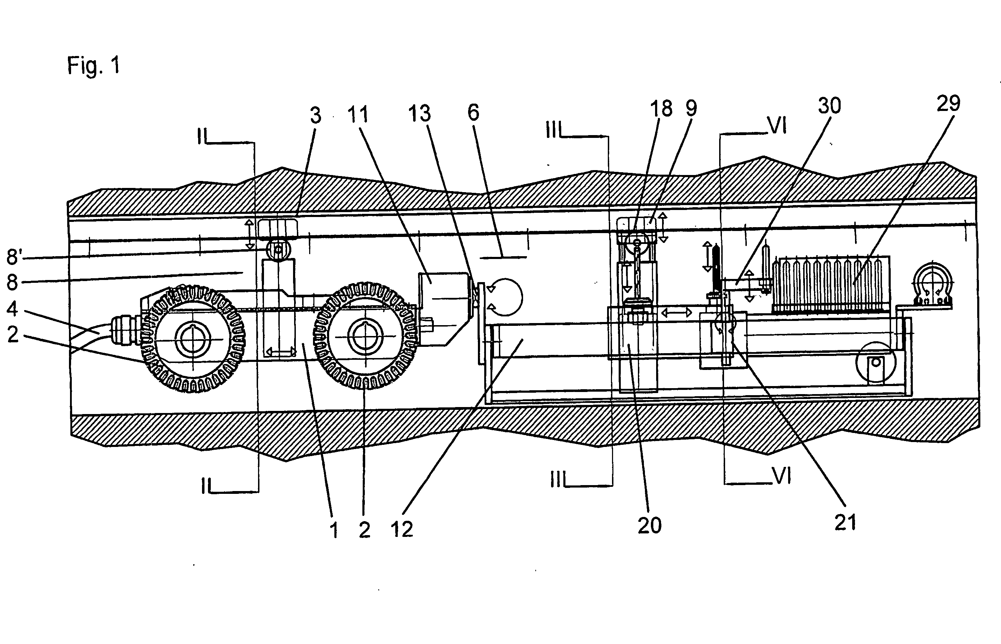

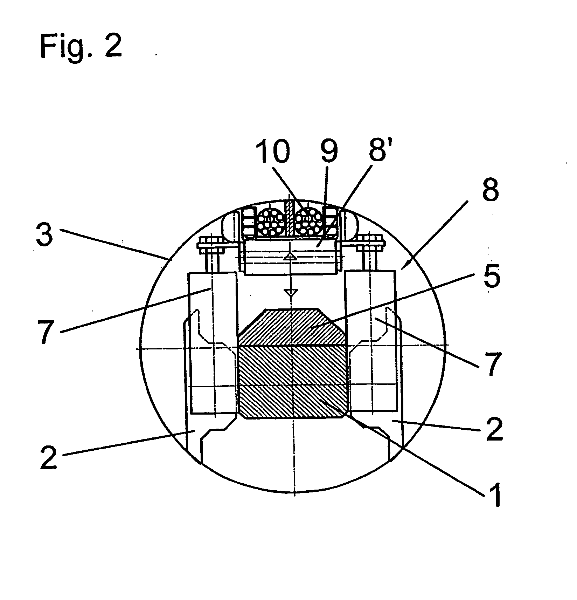

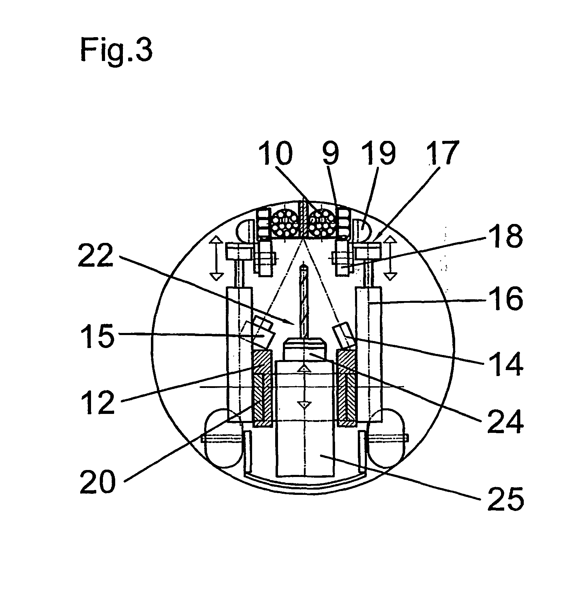

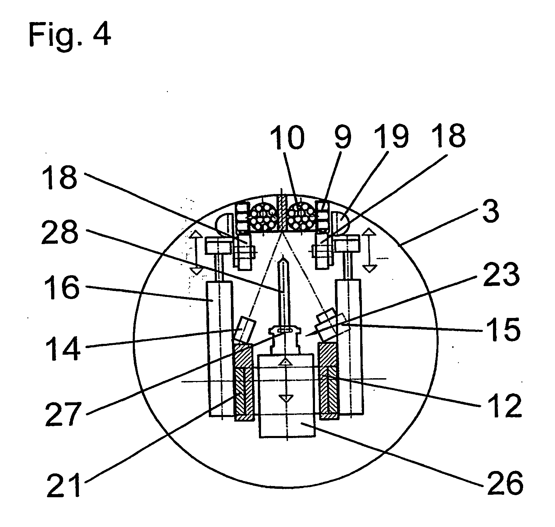

In der Zeichnung ist die Erfindung an Hand eines Ausführungsbeispieles schematisch veranschaulicht. Fig. 1 zeigt einen Längsschnitt durch einen Kanal mit einer in diesen Kanal befindlichen erfindungsgemäßen Montagevorrichtung. Fig. 2 stellt einen Schnitt nach der Linie II-II in Fig. 1, Fig. 3 einen Schnitt nach der Linie III-III in Fig. 1 und Fig. 4 einen Schnitt nach der Linie IV-IV in Fig. 1 dar.

Die erfindungsgemäße Montagevorrichtung weist einen Wagen 1 auf, der über Räder 2 in einem nicht begehbaren Kanal 3 über einen nicht näher dargestellten Antriebsmotor verfahren werden kann. Der Wagen 1 ist über eine zur Oberfläche führende Versorgungsleitung 4 mit den erforderlichen Energiequellen verbunden.

Am Wagen 1 ist ein Schlitten 5 in Kanallängsrichtung 6 verschiebbar gelagert, welcher eine pneumatisch betätigte Kolben-Zylindereinheit 7 trägt, die mit eine Abstützeinheit 8 bildenden Stützrollen 8' verbunden ist, über welche eine Kabeltasse 9 abgestützt wird, die Glasfaserleitungen 10 aufnimmt.

Der Wagen 1 ist an seinem Ende mit einer Konsole 11 verbunden, an der ein Träger 12 um eine in Kanallängsrichtung 6 verlaufende Achse 13 schwenkbar gelagert ist. Am Träger 12 sind ein Laserpointer 14 und eine Beobachtungskamera 15 vorgesehen, durch welche die Befestigungsstelle der Kabeltasse 9 an der Kanalwand bestimmt und beobachtet werden kann.

Am Träger 12 ist eine pneumatisch betätigbare Kolben-Zylindereinheit 16 befestigt, an der eine in Richtung zur Kanalwand bewegbare Ausrichteinheit 17 für die Kabeltasse 9 abgestützt ist. Diese Ausrichteinheit 17 weist die Kabeltasse 9 an ihrer Unterseite abstützende Rollen 18 sowie die Kabeltasse seitlich umschließende Wangen 19 auf. Durch diese Ausrichteinheit 17 wird, entsprechend der Verschwenkung des Trägers 12 um die Achse 13, die Kabeltasse 9 entweder im Scheitel des Kanales 3 oder in einer davon abweichenden Lage, an der Kanalwand fixiert und in dieser Lage gehalten.

Am Träger 12 ist weiters ein Schlitten 20 in Kanallängsrichtung 6 verschiebbar gelagert, an welchem eine Bohreinrichtung 22 und eine Schraubendreheinrichtung 23 angeordnet sind. Es können aber auch Bohreinrichtung 22 und Schraubendreheinrichtung 23 auf getrennten, unabhängig voneinander verschiebbar am Träger 12 angeordneten Schlitten vorgesehen sein. Die Bohreinrichtung 22 umfasst eine Bohrmaschine 24, die auf einem durch eine pneumatisch betätigte Kolben-Zylindereinheit in Richtung zur Kanalwand verschiebbaren Ständer 25 befestigt ist.

Die Schraubendreheinrichtung 23 ist gleichfalls auf einem durch eine pneumatisch betätigbare Kolben-Zylindereinheit verschiebbaren Ständer 26 angeordnet und umfasst eine Aufnahme 27, die mit einer den Schraubenkopf einer Befestigungsschraube 28 umschließenden elastischen Hülse versehen ist. Auf dem Schlitten 20 ist weiters ein Schraubenmagazin 29 angeordnet, von welchem über eine Zuführeinrichtung 30 jeweils eine Befestigungsschraube 28 der elastischen Hülse der Aufnahme 27 zugeführt wird.

Die erfindungsgemäße Montagevorrichtung arbeitet wie folgt:

Nach dem Einsetzen des Wagens 1 in den Kanal 3 über einen zur Oberfläche führenden Revisionsschacht und dem Anschließen der Versorgungsleitungen 4 wird das Ende einer aus mehreren Segmenten zusammengesetzten Kabeltasse 9 auf die Stützrollen 8' der Abstützeinheit 8 aufgelegt, worauf diese Abstützeinheit 8 über die Kolben-Zylindereinheit 7 in Richtung zur Kanalwand bewegt wird. Anschließend wird die Kabeltasse 9 in Kanallängsrichtung 6 verschoben, bis das Ende auf der Ausrichteinheit 17 abgestützt ist. In der Folge wird, falls erforderlich, der Träger 12 um die Achse 13 verschwenkt, und es wird die Ausrichteinheit 17 in Richtung zur Kanalwand verschoben, sodass diese Ausrichteinheit 17 mit der darauf abgestützten Kabeltasse 9 die gewünschte Lage an der Kanalwand einnimmt, in welcher insbesondere keine Behinderung von Kanaleinmündungen durch die Kabeltasse erfolgt. Durch den Laserpointer 14 wird jene Stellung markiert, in der die Befestigung der Kabeltasse zu erfolgen hat, ohne dass dabei eine Beschädigung der in der Kabeltasse 9 befindlichen Leitungen 10 erfolgt. Dies ist beispielsweise jener Bereich, wo zwischen den Leitungen 10 in der Kabeltasse 9 ein Abstandhalter vorgesehen ist. Eine Beobachtung ist durch die Kamera 15 ermöglicht.

Anschließend wird der Schlitten 20 mit der Bohreinrichtung 22 und der Schraubendreheinrichtung 23 in eine Lage verfahren, in welcher die Bohrmaschine 24 sich genau unterhalb der durch den Laserpointer 14 markierten Stellung befindet, worauf mittels der Bohrmaschine 24 ein Bohrloch durch den Abstandhalter hindurch in die Kanalwand gebohrt wird.

Nach Abschluss des Bohrvorganges wird der Schlitten 20 in eine Lage verschoben, in der sich die Schraubendreheinrichtung 23 unterhalb des hergestellten Bohrloches befindet und es wird mittels dieser Schraubendreheinrichtung 23 eine in der Aufnahme 27 befindliche Befestigungsschraube 28 in das Bohrloch eingeschraubt, sodass eine Befestigung der Kabeltasse 9 an der Kanalwand an dieser Stelle erfolgt ist.

Anschließend wird die Schraubendreheinrichtung 23 in ihre Ausgangslage zurückgefahren, die Rollen 8' der Abstützeinheit 8 und die Ausrichteinheit 17 werden abgesenkt und der Wagen 1 mit dem dran schwenkbar angeordneten Träger 12 werden in Kanallängsrichtung 6 um eine Distanz verfahren, die dem Abstand zwischen zwei Befestigungsstellen der Kabeltasse entspricht, worauf sich der beschriebene Vorgang wiederholt.

## Patentansprüche

1. Montagevorrichtung für eine in einem Kanal, vorzugsweise in einem Abwasserkanal, angeordnete Kabeltasse (9) für Leitungen (10), insbesondere Glasfaserleitungen, beinhaltend einen im Kanal (3) in Längsrichtung desselben verfahrbaren Wagen (1), auf dem eine in Richtung zur Kanalwand verschiebbare Abstützeinheit (8) für die Kabeltasse (9) sowie eine Montageeinheit für die Festlegung der Kabeltasse (9) an der Kanalwand vorgesehen sind, **dadurch gekennzeichnet, dass** die Montageeinheit auf einem Träger (12) angeordnet ist, der um eine in Kanallängsrichtung (6) verlaufende Achse (13) schwenkbar mit dem Wagen (1) verbunden ist.

2. Montagevorrichtung nach Anspruch 1, **dadurch gekennzeichnet, dass** die Montageeinheit eine am Träger (12) angeordnete, in Richtung zur Kanalwand bewegbare, die Kabeltasse (9) zumindest teilweise umgebende Ausrichteinheit (17) umfasst.

3. Montagevorrichtung nach Anspruch 1 oder 2, **dadurch gekennzeichnet, dass** die Ausrichteinheit (17) die Kabeltasse (9) an ihrer Unterseite abstützende Rollen (18) und die Kabeltasse (9) seitlich umschließende Wangen (19) aufweist.

4. Montagevorrichtung nach Anspruch 1, 2 oder 3, **dadurch gekennzeichnet, dass** am Träger (12) eine, vorzugsweise druckmittelbetätigte, Kolben-Zylindereinheit (16) angeordnet ist, an welcher die Ausrichteinheit (17) abgestützt ist.

5. Montagevorrichtung nach einem der Ansprüche 1 bis 4, **dadurch gekennzeichnet, dass** am Träger (12) ein die Befestigungsstelle der Kabeltasse (9) an der Kanalwand bestimmender Laserpointer (14) vorgesehen ist.

6. Montagevorrichtung nach einem der Ansprüche 1 bis 5, **dadurch gekennzeichnet; dass** am Träger (12) eine die Befestigungsstelle der Kabeltasse (9) an der Kanalwand aufnehmende Kamera (15) vorgesehen ist.

7. Montagevorrichtung nach einem der Ansprüche 1 bis 6, **dadurch gekennzeichnet, dass** die Montageeinheit eine am Träger (12) verschiebbar angeordnete Bohreinrichtung (22) und eine am Träger (12) verschiebbar angeordnete Befestigungseinrichtung (23), vorzugsweise eine Schraubendreheinrichtung, umfasst, wobei die Lage der Bohreinrichtung (22) und die Lage der Befestigungseinrichtung (23) am Träger (12) veränderbar sind.

8. Montagevorrichtung nach Anspruch 7, **dadurch gekennzeichnet, dass** Bohreinrichtung (22) und Befestigungseinrichtung (23) auf wenigstens einem auf dem Träger (12) verschiebbar gelagerten Schlitten (20) angeordnet sind.

9. Montagevorrichtung nach Anspruch 7 oder 8, **dadurch gekennzeichnet, dass** die Bohreinrichtung (22) eine Bohrmaschine (24) umfasst, die auf einem, vorzugsweise durch eine druckmittelbetätigte Kolben-Zylindereinheit (16), in Richtung zur Kanalwand verschiebbaren Ständer (25) befestigt ist.

10. Montagevorrichtung nach Anspruch 7, **dadurch gekennzeichnet, dass** die die Befestigungseinrichtung (23) bildende Schraubendreheinrichtung eine den Schraubenkopf einer Befestigungsschraube (28) umfassende, zu einer Drehbewegung angetriebene Aufnahme (27) aufweist, die mit einer den Schraubenkopf umschließenden elastischen Hülse versehen ist.

11. Montagevorrichtung nach Anspruch 7, **dadurch gekennzeichnet, dass** am die Befestigungseinrichtung (23) abstützenden Schlitten (20) ein Schraubenmagazin (29) gelagert ist, von welchem über eine Zuführeinrichtung (30) der Schraubenkopf jeweils einer Befestigungsschraube (28) der Aufnahme (27) zugeführt wird.

12. Montagevorrichtung nach Anspruch 1, **dadurch gekennzeichnet, dass** die Abstützeinheit, vorzugsweise durch eine druckmittelbetätigte Kolben-Zylindereinheit (16), in Richtung zur Kanalwand verschiebbare Stützrollen (18) aufweist, die auf dem Wagen (1) abgestützt sind.

## Claims

1. Mounting device for a cable cup (9) for lines (10), particularly glass fibre lines, arranged in a channel, preferably in a sewer, comprising a carriage (1) displaceable within said channel (3) in longitudinal direction thereof, on which a supporting unit (8) for said cable cup (9), that is displaceable in the direction towards the channel wall, and a mounting unit for fixing said cable cup (9) on said channel wall are provided, **characterised in that** said mounting unit is located on a support (12) which is connected to said carriage (1) in a pivotal manner about an axis (13), which extends in longitudinal direction (6) of said channel.

2. Mounting device according to claim 1, **characterised in that** the mounting unit comprises a locating unit (17), which surrounds said cable cup (9) at least in part and is arranged on said support (12), being moveable in the direction to said channel wall.

3. Mounting device according to claim 1 or 2, **characterised in that** the locating unit (17) comprises rollers (18), which support the lower portion of said cable cup (9), and cheeks which laterally enclose said cable cup (9).

4. Mounting device according to claim 1, 2 or 3, **characterised in that** on said support (12), a piston-cylinder unit (16), preferably actuated by a pressure medium, is arranged onto which said locating unit (17) is supported.

5. Mounting device according to any of claims 1 to 4, **characterised in that** on said support (12), a laser pointer (14) is provided which determines the fixing place of said cable cup (9) on said channel wall.

6. Mounting device according to any of claims 1 to 5, **characterised in that** on said support (12), a camera (15) is provided which takes the fixing place of said cable cup (9) on said channel wall.

7. Mounting device according to any of claims 1 to 6, **characterised in that** said mounting unit comprises a drilling device (22) displaceable on said support (12) and a mounting device (23) displaceable on said support (12), preferably a screw driving device, the position of said drilling device (22) and the position of said mounting device (23) on said support being changeable.

8. Mounting device according to claim 7, **characterised in that** said drilling device (22) and said mounting device (23) are arranged on at least one slide (20) that is displaceably supported on said support (12).

9. Mounting device according to claim 7 or 8, **characterised in that** said drilling device (22) comprises a drill (24) that is mounted on a post (25) displaceable in the direction towards said channel wall, preferably by a piston-cylinder unit (16) actuated by a pressure medium.

10. Mounting device according to claim 7, **characterised in that** the screw driver device, that forms said mounting unit (23), comprises a seat (27) which embraces the screw head of a mounting screw (28), is driven to exert a rotational movement, and includes an elastic sleeve which encircles the screw head.

11. Mounting device according to claim 7, **characterised in that** on the slide (20) which supports said mounting device (23), a screw magazine (29) is supported, from which the screw head of a respective fastening screw (28) is fed to the seat (27) by means of a feeding device (30).

12. Mounting device according to claim 1, **characterised in that** said supporting unit comprises supporting rollers (18) displaceable in the direction towards said channel wall, preferably by a piston-cylinder unit (16) actuated by a pressure medium, which rest on said carriage (1).

## Revendications

1. Dispositif de montage pour une attache de câble (9) pour des conduits (10), en particulier des conduits à fil de verre, dans un canal, de préférence dans un canal des eaux de trop-plein, comprenant un chariot (1), qui est déplaçable dans le canal (3) en direction longitudinal de celui-ci, et sur lequel une unité d'appui (8) pour l'attache de câble (9) déplaçable en direction vers la paroi du canal ainsi qu'une unité de montage pour fixer l'attache de câble (9) à la paroi du canal sont prévues, **caractérisé en ce que** l'unité de montage est disposée sur un longeron (12), qui est relié au chariot (1) d'une manière pivotable autour d'un axe (13) s'étendant en direction longitudinale du canal (6).

2. Dispositif de montage selon la revendication 1, **caractérisé en ce que** l'unité de montage comprend une unité d'ajustage (17), qui entoure au moins partiellement l'attache de câble (9) et est disposé sur le longeron (12) en étant amovible en direction de la paroi du canal.

3. Dispositif de montage selon la revendication 1 ou 2, **caractérisé en ce que** l'unité d'ajustage (17) comprend des poulies (18), qui supportent le bas de l'attache de câble (9), et des jumelles (19), qui entourent latéralement l'attache de câble (9).

4. Dispositif de montage selon la revendication 1, 2 ou 3, **caractérisé en ce que** sur le longeron (12) une unité de piston et cylindre (16) est disposé, préférablement actionnée par un milieu de pression, à laquelle l'unité d'ajustage (17) s'appuie.

5. Dispositif de montage selon une quelconque des revendications 1 à 4, **caractérisé en ce que** sur le longeron (12) un laser pointer (14) est prévu, qui détermine la place de fixation de l'attache de câble (9) à la paroi du canal.

6. Dispositif de montage selon une quelconque des revendications 1 à 5, **caractérisé en ce que** sur le longeron (12) une caméra est prévue, qui prends la place de fixation de l'attache de câble à la paroi du canal.

7. Dispositif de montage selon une quelconque des revendications 1 à 6, **caractérisé en ce que** l'unité de montage comprend un dispositif de perçage (22), qui est disposée d'une façon déplaçable au longeron (12), et un dispositif de montage (23), de préférence un dispositif de tournevis, qui est disposée d'une façon déplaçable au longeron (12), la position du dispositif de perçage (22) et la position du dispositif de montage (23) étant changeables au longeron (12).

8. Dispositif de montage selon la revendication 7, **caractérisé en ce que** le dispositif de perçage (22) et le dispositif de montage (23) sont disposés à au moins un glissoir (20), qui est supporté d'une manière déplaçable sur le longeron (12).

9. Dispositif de montage selon la revendication 7 ou 8, **caractérisé en ce que** le dispositif de perçage (22) comprend un perceuse (24), qui est montée sur un montant (25) déplaçable en direction vers la paroi du canal, préférablement par une unité de piston et cylindre (16) actionnée par un milieu de pression.

10. Dispositif de montage selon la revendication 7, **caractérisé en ce que** le dispositif de tournevis, qui forme le dispositif de montage (23), comprend un accueil (27) entraîné à une rotation, qui tient la tête de vis d'une vis de fixation (28) embrassé, et qui est pourvu d'une douille élastique entourant la tête de vis.

11. Dispositif de montage selon la revendication 7, **caractérisé en ce qu'**au glissoir (20), qui appuie le dispositif de montage (23), un magazine de vis (29) est supporté, duquel la tête de vis d'une vis de fixation (28) respective est fournie à l'accueil (27) par un dispositif d'amenée (30).

12. Dispositif de montage selon la revendication 1, **caractérisé en ce que** l'unité d'appui comprend des rouleaux d'appui (18) déplaçables en direction vers la paroi du canal, préférablement par une unité de piston et cylindre (16) actionnée par un milieu de pression, qui s'appuient sur le chariot (1).
